# EUROPEAN PATENT APPLICATION

(11) **EP 3 738 721 A1**
(43) Date of publication of application: **18.11.2020**
(21) Application number: 19382374.7
(22) Date of filing: 13.05.2019
(51) Int. Cl.: B25J 9/08, B25J 15/04

(54) **ADAPTER INTERCHANGE SYSTEM FOR ROBOTISED SYSTEMS**

(71) Applicant: Open Mind Ventures, S.L.U., 08700 Igualada Barcelona (ES)
(72) Inventor: Balsells Mercade, Antoni, 08700 Igualada Barcelona (ES); Guimerà Pedrola, Antoni, 08700 Igualada Barcelona (ES); Carrer Vives, Josep Mª, 08700 Igualada Barcelona (ES); Balsells Mercade, Bernat, 08700 Igualada Barcelona (ES)
(74) Representative: Herrero & Asociados, S.L.

(57) **Abstract**

The adapter interchange system for robotised systems comprising a robotic arm (1) provided with a tool (2) at one of the ends thereof, with said tool (2) comprising at least one actuator (3) joined to the end of said robotic arm (1) and at least one adapter (4) detachably joined to said at least one actuator (3).

It allows an adapter interchange system to be provided which allows the adapter of the actuator of the tool to be changed, instead of changing the entire tool, to provide a less complex and more economical solution.

## Description

The present invention relates to an adapter interchange system for robotised systems.

### Background of the invention

At present, robotised systems are known which use different tools to carry out different tasks. Said robotised systems are very versatile and it is with the specialisation of said tools that the different tasks can be carried out.

Said tools may, or may not, incorporate some type of actuator such as a motor, a clamp, a pneumatic piston, an electromagnet, etc. In the case of incorporating an actuator, said tools require an adapter for the application specifically intended to be carried out. Said adapter is the final part of the tool that enters into contact with the object to carry out the task, and it is specific for said application (for example, if said application consists of grasping and moving spherical objects, an actuator such as a clamp is required, and special adapters of the clamp for grasping spherical objects so that they cannot fall while being moved).

In both cases where the tool does or does not incorporate an actuator, automatic tool interchange systems are known in which the entire tool is changed, that is to say, in the case where the tool incorporates a type of actuator, this is changed together with the tool.

This involves significant drawbacks, such as for example:
- The cost of the entire application: said actuators are very expensive in relation to the total cost of the tool, which means that if there is a robotised system which has to carry out different tasks with different tools, the cost is multiplied due to the need for each tool to incorporate its own actuator, when, in many cases, it is the same actuator model.
- The complexity of the mechanism: in tools incorporating an actuator, a strong fastening is required to join said actuator to the rest of the robotised system, which means that the interchange of the tool must be capable of implementing the force required to assemble and disassemble said fastening. However, the fastening of the adapter to the actuator does not have to be as strong.

Therefore, the need is evident for an adapter interchange system which allows the adapter of the actuator of the tool to be changed, instead of changing the entire tool, to provide a less complex and more economical solution.

### Description of the invention

With the adapter interchange system of the invention, the cited drawbacks are resolved, presenting other advantages described below.

The adapter interchange system for robotised systems according to the present invention comprises a robotic arm provided with a tool at one of the ends thereof, with said tool comprising at least one actuator joined to the end of said robotic arm and at least one adapter detachably joined to said actuator.

Owing to this characteristic, it is not necessary to change the entire tool, but rather only its adapter since the actuator is the same for all types of tools.

According to a preferred embodiment, said actuator is a clamp and comprises movable tabs which allow the automated decoupling of the adapter.

Said movable tabs are preferably placed in the interior of grooves.

In addition, said adapter preferably comprises two separated halves. In particular, each half of the adapter advantageously comprises a fixed part and an interchangeable part.

Preferably, each fixed part of each half of the adapter comprises a prepared area to assemble said interchangeable part and said interchangeable part comprises at least one coupling element to be fixed to the prepared area of the fixed part.

According to preferred embodiments, said prepared area is a cavity and said coupling element is a clip or a magnet.

Additionally, the fixed part of each half of the adapter is advantageously fixed to one of the movable tabs of the actuator.

The adapter interchange system for robotised systems according to the present invention also advantageously comprises an adapter interchange base.

Said adapter interchange base comprises a plurality of housings for the adapters and each housing for the adapters comprises pieces complementing said coupling elements to allow the decoupling of the interchangeable part of the adapter.

### Brief description of the drawings

To better understand the foregoing, drawings are accompanied in which a practical embodiment is represented schematically and only by way of non-limiting example.
Figure 1 is a perspective view of a robotic arm provided with an adapter interchange system according to the present invention;
Figure 2 is a perspective view of the end of the robotic arm of Figure 1, where the actuator of the interchange system according to the present invention can be seen;
Figure 3 is a perspective view of one end of the robotic arm of Figure 1, where the tool is shown in more detail;

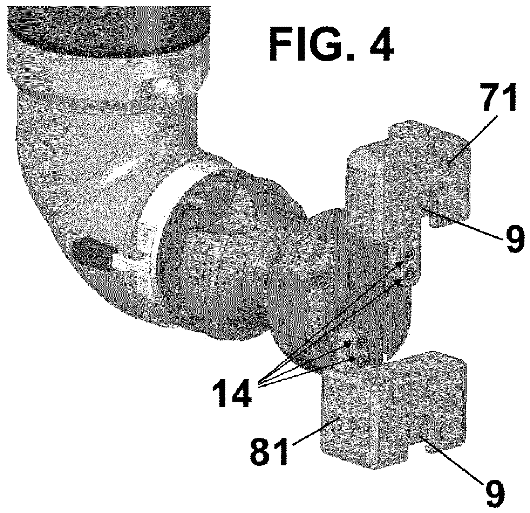

Figure 4 is a perspective view of the end of the robotic arm of Figure 3 with the fixed parts of the adapter;
Figures 5 and 6 are lateral sectional views of the upper and lower halves, respectively, of the adapter; and
Figures 7 to 9 are perspective views of the robotic arm provided with the interchange system according to the present invention during the placement of an adapter in a housing of an interchange base.

### Description of a preferred embodiment

As indicated above, the object of the present invention is to provide an adapter interchange system for robotised systems which allows only one part of the tool to be changed, called the adapter in the present document, without the need to change it together with the rest of the tool, called the actuator in the present document.

The adapter interchange system comprises a robotic arm 1, at one of the ends of the same is arranged a tool identified generally by means of the reference numeral 2.

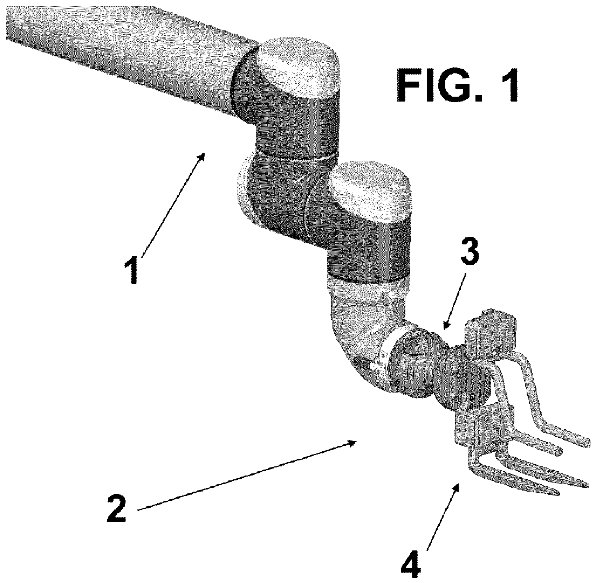

According to the embodiment shown, the tool 2 comprises an actuator 3 and at least one adapter 4. Said actuator 3 is, for example, a clamp which is fixed to the robotic arm at one of the ends thereof (Figure 1).

It should be pointed out, however, that a tool can comprise more than one actuator and more than one adapter.

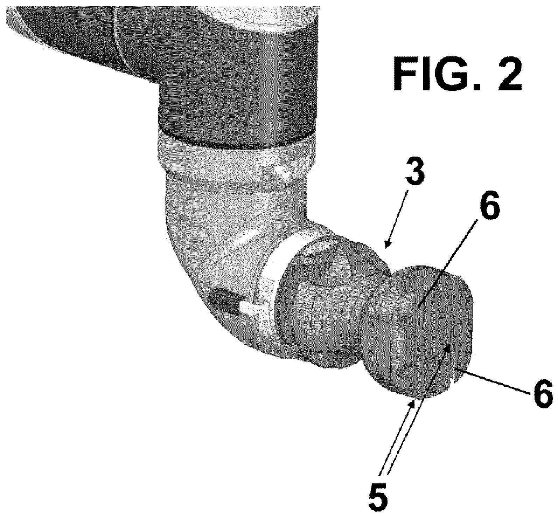

Said actuator 3 comprises two movable tabs 5 which are housed in both grooves 6 (Figure 2). For the outward movement of the actuator 3, said tabs 5 move together and spread apart actuated by an electric motor, making a clamping movement.

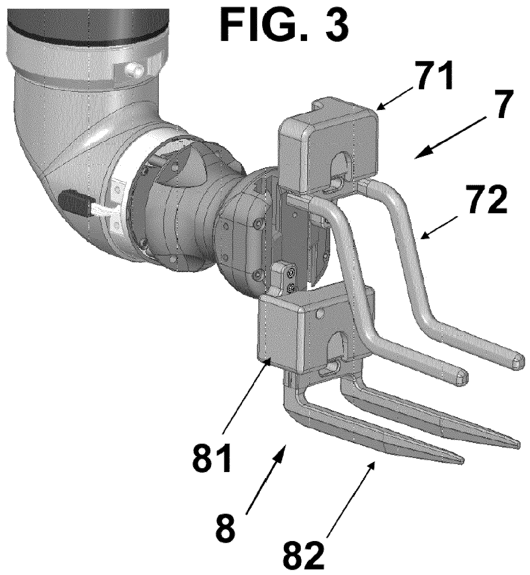

In said tabs 5 the adapter 4 of the tool is mounted, as can be seen in Figure 3. Said adapter 4 is formed by two halves, one upper half 7 and one lower half 8, each one of which is fixed in both tabs 5 of the actuator 3.

Each half 7, 8, in turn, is formed by two parts, one part 71, 81 fixed to the actuator 3 and one interchangeable part 72, 82. Said interchangeable parts 72, 82 interact with the final objects to be manipulated by the robotic system and their shape varies depending on the object and the task that they have to perform.

Said fixed parts 71, 81 of the adapter 4 are assembled on the tabs 5 of the actuator 3 with a strong assembly method, for example, by means of screws 14, since they are in the actuator 3.

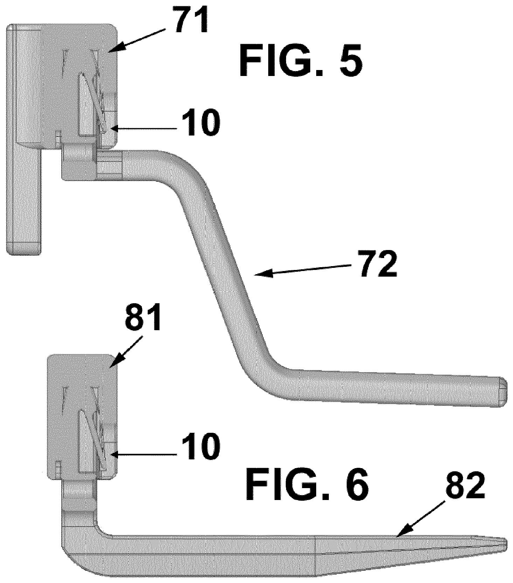

Said fixed parts 71, 81 have, in turn, a prepared area 9 in the form of a cavity to couple the interchangeable parts 72, 82. Said interchangeable parts 72, 82 comprise at least one rapid coupling element 10 to the fixed part 71, 82 such as for example clips or magnets, which can be seen better in Figures 5 and 6.

Additionally, said interchangeable parts 72, 82 can be separated from the fixed parts 71, 82 when they meet an obstacle for safety reasons, for example by means of a mechanical (breakable) fuse or a (reusable) magnet. In a different embodiment, the safety elements can be incorporated in the interchangeable parts 72, 82 themselves instead of being in the joining of the interchangeable parts 72, 82 with the fixed parts 71, 81.

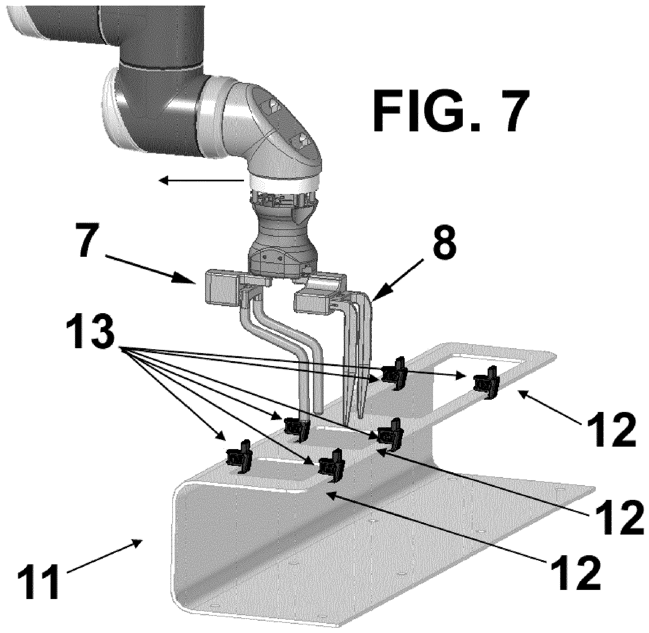

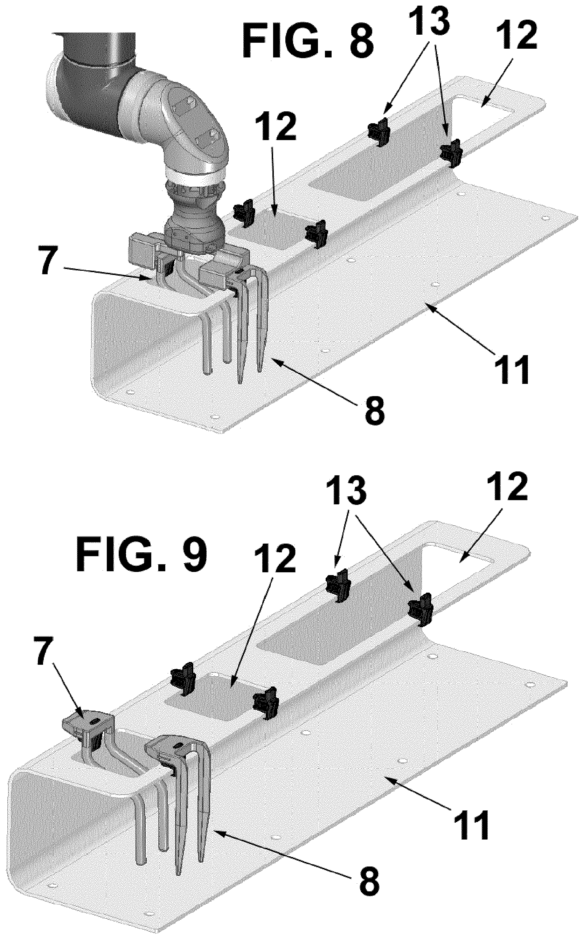

In Figures 7 to 9, an adapter interchange base 11 is shown which is where the robotic system carries the tool 2 to be able to disassemble the interchangeable part 72, 82, of the adapter 4.

Said adapter interchange base 11 comprises means to secure and unlock the interchangeable part 72, 82 of the adapter 4 of the tool 2.

According to a preferred embodiment of the present invention, said means for unlocking the interchangeable part 72, 82 of the adapter 4 are pieces 13 which press the coupling elements 10 of the interchangeable parts 72, 82, said pieces 13 being placed in housings 12 for said adapters 4.

The adapter interchange base 11 can form part of an adapter store which is where the different interchangeable parts 72, 82 of the adapters are kept and is also where the robotic system, when there is no adapter 4 assembled, is going to look for the next adapter that it needs.

The preferred representation which is illustrated in this description represents a tool for grasping and transporting objects, whether they are single objects or formed by different elements, for example blocks formed by multiple layers of flexible laminar material. Said flexible laminar material can come in various different shapes and have different textures and rigidity, consequently it is necessary to have different adapters of the tool to be able to grasp the different blocks and a rapid and economical interchange system is necessary, like the one presented in the present invention.

In spite of the fact that reference has been made to a specific embodiment of the invention, it is evident to a person skilled in the art that the adapter interchange system described is capable of having numerous variations and modifications and that all the details mentioned can be substituted for others which are technically equivalent without departing from the scope of protection defined by the enclosed claims.

## Claims

1. An adapter interchange system for robotised systems comprising a robotic arm (1) provided with a tool (2) at one of the ends thereof, **characterised in that** said tool (2) comprises at least one actuator (3) joined to the end of said robotic arm (1) and at least one adapter (4) detachably joined to said at least one actuator (3).

2. The adapter interchange system for robotised systems according to claim 1, wherein the adapter (4) comprises a fixed part (71, 81) and an interchangeable part (72, 82).

3. The adapter interchange system for robotised systems according to claim 2, wherein each fixed part (71, 81) of the adapter (4) comprises a prepared area (9) to assemble said interchangeable part (72, 82).

4. The adapter interchange system for robotised systems according to claim 3, wherein said prepared area (9) is a cavity.

5. The adapter interchange system for robotised systems according to claim 3, wherein said interchangeable part (72, 82) comprises at least one coupling element (10) to be fixed to the prepared area (9) of the fixed part (71,81).

6. The adapter interchange system for robotised systems according to claim 5, wherein said coupling element (10) is a clip or a magnet.

7. The adapter interchange system for robotised systems according to claim 1, wherein said actuator (3) comprises movable tabs (5).

8. The adapter interchange system for robotised systems according to claims 2 and 7, wherein the fixed part (71, 81) of the adapter (4) is fixed to one of the movable tabs (5) of the actuator (3).

9. The adapter interchange system for robotised systems according to claim 2, wherein the interchangeable part (72, 82) comprises a safety element.

10. The adapter interchange system for robotised systems according to claim 9, wherein said safety element is a mechanical fuse or a magnet.

11. The adapter interchange system for robotised systems according to any one of the preceding claims, which also comprises an adapter interchange base (11).

12. The adapter interchange system for robotised systems according to claim 11, wherein said adapter interchange base (11) comprises a plurality of housings (12) for the adapters.

13. The adapter interchange system for robotised systems according to claims 6 and 12, wherein each housing (12) for the adapters comprises pieces (13) complementing said coupling elements (10).

14. The adapter interchange system for robotised systems according to claim 1, wherein said actuator (3) is a clamp.

15. The adapter interchange system for robotised systems according to any one of the preceding claims, which is used for tasks to grasp and transport objects.

16. The adapter interchange system for robotised systems according to claim 15, wherein said objects to be grasped and transported are blocks of flexible laminar material layers.
